# EUROPEAN PATENT SPECIFICATION

(11) **EP 3 784 932 B1**
(45) Date of publication and mention of the grant of the patent: **22.03.2023**
(21) Application number: 19793146.2
(22) Date of filing: 17.04.2019
(51) Int. Cl.: F16J 15/34, B60T 10/02

(54) **SEALING ARRANGEMENT, HYDRODYNAMIC MACHINE, AND VEHICLE**
DICHTUNGSANORDNUNG, HYDRODYNAMISCHE MASCHINE UND FAHRZEUG
AGENCEMENT D'ÉTANCHÉITÉ, MACHINE HYDRODYNAMIQUE ET VÉHICULE

(30) Priority: 25.04.2018 SE 1850490
(43) Date of publication of application: 03.03.2021
(73) Proprietor: Scania CV AB, 151 87 Södertälje (SE)
(72) Inventor: NILSSON, Oskar, 151 38 Södertälje (SE)
(74) Representative: Scania CV AB
(86) International application number: PCT/SE2019/050353
(87) International publication number: WO 2019/209159

(56) References cited:
- EP-A1- 2 470 404
- WO-A1-2016/175695
- WO-A1-2016/175695
- CN-A- 105 090 517
- DE-A1-102009 058 341
- GB-A- 1 208 554

## Description

### TECHNICAL FIELD

The present invention relates to a sealing arrangement for a hydrodynamic machine, wherein the sealing arrangement is configured to seal a space between a shaft and a housing of the hydrodynamic machine. The present invention further relates to a hydrodynamic machine and a vehicle comprising a hydrodynamic machine.

### BACKGROUND

A hydrodynamic machine, such as a hydrodynamic retarder, comprises a stator and a rotor arranged in a housing. The stator and rotor may have a substantially corresponding design with a multiplicity of shovels arranged in a respective annular shell. The stator and the rotor are arranged such that the annular shells together form a workspace. A hydrodynamic machine comprises a shaft connected to the rotor, wherein the shaft extends through an opening in the housing. The shaft may be connectable to drive wheels of the vehicle via a transmission. When retardation is required, fluid, such as oil, water, or a water mixture, is pumped into the workspace, and the viscous drag induced will slow the vehicle. The working fluid will heat and is usually circulated through a cooling system. The degree of retardation can be varied by adjusting the fill level of the workspace. Hydraulic retarders are quiet, often inaudible over the sound of a running engine, and are especially quiet in operation compared to engine brakes.

A sealing arrangement is usually arranged in a space between the opening of the housing and the shaft in order to prevent leakage of the working medium out of the housing. A sealing arrangement comprises a sealing ring connected to the housing and a sealing ring connected to the shaft. Sealing surfaces of the sealing rings is in abutting contact in an abutment interface and slide in relation to each other upon rotation of the shaft.

The document DE 102009058341A1 discloses a sealing arrangement for a hydrodynamic machine wherein the sealing arrangement is configured to seal a space between shaft and a housing. A sliding ring seal has a first sliding ring and a second sliding ring which are arranged to enclose one another concentrically in the radial direction and each have a sealing surface and which, together with a mating element, seal off a sealing gap running in the radial direction with respect to the drive shaft.

The pressure in the workspace is increased to significant pressure levels during operation of the hydrodynamic machine, which put high requirements on the sealing arrangement.

Problems associated with these types of sealing arrangements are to ensure that the sealing arrangement seals sufficiently, that the sealing arrangement is sufficiently lubricated, and the sealing arrangement is sufficiently cooled. Further, it has been found that the sealing surfaces is worn out relatively fast when water or a water mixture are used as working medium. If a sealing arrangement of this type is not sufficiently cooled and/or not sufficiently lubricated, it may malfunction. As a result, working medium, such as water or a water mixture, may leak past the sealing surfaces of the sealing rings into a transmission. Further, in some cases, transmission oil may leak past the sealing surfaces of the sealing rings into the workspace of the hydrodynamic machine. In both these cases, repair and replacement of components may be required which usually incur high costs.

Further, on today's market, it is an advantage if products, such as sealing arrangements, can be manufactured and assembled in a cost-efficient manner.

### SUMMARY

It is an object of the present invention to overcome, or at least alleviate, at least some of the above-mentioned problems and drawbacks.

According to a first aspect of the invention, the object is achieved by a sealing arrangement for a hydrodynamic machine. The sealing arrangement is configured to seal a space between a shaft and a housing of the hydrodynamic machine. The sealing arrangement comprises a sealing housing configured to be connected to the housing, and a first sealing ring configured to be connected to the shaft. The first sealing ring comprises a first annular sealing surface. The sealing arrangement further comprises a second sealing ring arranged in the sealing housing. The second sealing ring comprises a second annular sealing surface configured to sealingly abut against the first annular sealing surface in a first abutment interface. The sealing arrangement comprises a coolant space adjacent to the first abutment interface. The sealing housing comprises a wall protruding into the coolant space. The wall is configured to direct a flow of coolant in the coolant space and the wall is integral of the sealing housing. Thereby, a sealing arrangement is provided having conditions and characteristics suitable for being assembled and manufactured in a still simpler and more cost-efficient manner. In addition, a more reliable sealing arrangement may be provided because the risk of the wall becoming loose during operation of the hydrodynamic machine can be reduced.

Since the sealing housing comprises the wall protruding into the coolant space for directing a flow of coolant in the coolant space, the cooling efficiency, and the lubrication efficiency, of the first abutment interface is improved. As a further result thereof, a more durable and reliable sealing arrangement is provided, capable of sealing the space between the shaft and the housing of the hydrodynamic machine in an efficient manner. Thereby, a sealing arrangement is provided capable of reducing cost of repair and replacement of components of a hydrodynamic machine.

Furthermore, since the sealing housing comprises the wall protruding into the coolant space, a sealing arrangement is provided having conditions and characteristics suitable for being assembled and manufactured in a simple and cost-efficient manner.

Accordingly, a sealing arrangement is provided overcoming, or at least alleviating, at least some of the above-mentioned problems and drawbacks. As a result, the above-mentioned object is achieved.

Optionally, the sealing housing is arranged such that the flow of coolant is directed around the wall. Thereby, the cooling efficiency, and the lubrication efficiency, of the first abutment interface is further improved. As a further result thereof, a more durable and reliable sealing arrangement is provided. In addition, a sealing arrangement is provided capable of reducing cost of repair and replacement of components of a hydrodynamic machine.

Optionally, the wall extends concentrically in relation to the second sealing ring. Thereby, the cooling efficiency, and the lubrication efficiency, of the first abutment interface is further improved. As a further result thereof, a more durable and reliable sealing arrangement is provided. In addition, a sealing arrangement is provided capable of reducing cost of repair and replacement of components of a hydrodynamic machine.

Optionally, the sealing arrangement comprises a third sealing ring arranged in the sealing housing, wherein the first sealing ring comprises a fourth annular sealing surface, and wherein the third sealing ring comprises a third annular sealing surface configured to sealingly abut against the fourth annular sealing surface. Thereby, a more durable and reliable sealing arrangement is provided, capable of sealing the space between the shaft and the housing of the hydrodynamic machine in an efficient manner. In addition, a sealing arrangement is provided capable of reducing cost of repair and replacement of components of a hydrodynamic machine.

Optionally, the wall extends in a space confined by the second and third sealing rings. Thereby, a sealing arrangement is provided capable of cooling and lubricating the first and second abutment interfaces in an improved manner. In addition, a flow of coolant in the space confined by the second and third sealing rings will cool the second and third sealing rings in a more efficient manner. Furthermore, the wall will separate the second and third sealing rings, and may contribute in keeping the second and third sealing rings in place during operation of the hydrodynamic machine. As a further result, a more durable and reliable sealing arrangement is provided. In addition, a sealing arrangement is provided capable of reducing cost of repair and replacement of components of a hydrodynamic machine.

Optionally, a first surface of the wall and a surface of the second sealing ring together delimit a first coolant passage portion of the coolant space, and wherein a second surface of the wall and a surface of the third sealing ring together delimit a second coolant passage portion of the coolant space. Thereby, a sealing arrangement is provided capable of cooling and lubricating the first and second abutment interfaces in an improved manner. In addition, a flow of coolant in the first and second coolant passages will cool the second and third sealing rings in a more efficient manner. As a further result thereof, a more durable and reliable sealing arrangement is provided. In addition, a sealing arrangement is provided capable of reducing cost of repair and replacement of components of a hydrodynamic machine.

Optionally, the sealing housing comprises a coolant inlet fluidly connected to the second coolant passage portion and a coolant outlet fluidly connected to the first coolant passage portion. Thereby, a flow of coolant from the coolant inlet to the coolant outlet will provide cooling of the second and third sealing rings, and cooling and lubrication of the first and second abutment interfaces, in a more efficient manner. As a further result thereof, a more durable and reliable sealing arrangement is provided. In addition, a sealing arrangement is provided capable of reducing cost of repair and replacement of components of a hydrodynamic machine.

Optionally, the sealing arrangement comprises one or more locking elements configured to lock the second and third sealing rings from rotating relative the sealing housing. Thereby, a more durable and reliable sealing arrangement is provided. As a further result thereof, a sealing arrangement is provided capable of reducing cost of repair and replacement of components of a hydrodynamic machine.

Optionally, the wall comprises at least one recess, and wherein the second and third sealing rings each comprises at least one recess, wherein each of the one or more locking elements extends into one recess of the wall and into one recess of the respective second and third sealing rings. Thereby, a simple and efficient locking of the second and third sealing rings is provided. In addition, a sealing arrangement is provided having conditions and characteristics suitable for being assembled and manufactured in a simple and cost-efficient manner.

Optionally, the recesses and the one or more locking elements are configured to allow a predetermined degree of rotation of the second and third sealing rings relative the sealing housing. Thereby, a sealing arrangement is provided capable of damping a movement of the second and third sealing rings relative the housing, which may for example occur during a rapid change in rotational velocity of the shaft, such as during a start-up phase of the hydrodynamic machine. As a result thereof, a more durable and reliable sealing arrangement is provided. In addition, a sealing arrangement is provided capable of reducing cost of repair and replacement of components of a hydrodynamic machine.

Optionally, the sealing housing comprises a first and a second annular cavity each delimited by the wall, and wherein the second sealing ring is arranged in the first annular cavity and the third sealing ring is arranged in the second annular cavity. Thereby, an efficient cooling and an efficient lubrication of the first and second abutment interfaces is provided in a simple manner. Furthermore, an efficient cooling of the second and third sealing rings is provided in a simple manner. In addition, a sealing arrangement is provided having conditions and characteristics suitable for being assembled and manufactured in a simple and cost-efficient manner.

Optionally, the coolant inlet is fluidly connected to the second annular cavity, and wherein the coolant outlet is fluidly connected to the first annular cavity. Thereby, an efficient cooling and an efficient lubrication of the first and second abutment interfaces is provided in a simple manner. Furthermore, an efficient cooling of the second and third sealing rings is provided in a simple manner.

Optionally, the sealing arrangement comprises two or more locking elements and a first connecting element connecting the two or more locking elements, and wherein the first connecting element is arranged in the first annular cavity. Thereby, a sealing arrangement is provided having conditions and characteristics suitable for being assembled and manufactured in a still simpler and cost-efficient manner. In addition, the first connecting element may contribute in reducing the risk of a dislocation of the two or more locking elements during operation of the hydrodynamic machine.

Optionally, the first connecting element and the one or more locking elements are formed by one coherent piece of material. Thereby, a sealing arrangement is provided having conditions and characteristics suitable for being assembled and manufactured in a still simpler and cost-efficient manner.

Optionally, the sealing arrangement comprises a second connecting element connecting the two or more locking elements, and wherein the second connecting element is arranged in the second annular cavity. Thereby, a sealing arrangement is provided having conditions and characteristics suitable for being assembled and manufactured in a still simpler and cost-efficient manner. In addition, the second connecting element may contribute in further reducing the risk of a dislocation of the two or more locking elements during operation of the hydrodynamic machine.

Optionally, the first connecting element, the second connecting element, and the one or more locking elements are formed by one coherent piece of material. Thereby, a sealing arrangement is provided having conditions and characteristics suitable for being assembled and manufactured in a still simpler and cost-efficient manner.

Optionally, the sealing arrangement comprises spring elements configured to bias the second and third sealing rings towards the first sealing ring. Thereby, the abutting contact in the respective first and second abutment interfaces is ensured, which improves the durability and reliability of the sealing arrangement.

Optionally, the spring elements are configured to bias the one or more locking elements towards the second and third sealing rings. Thereby, the locking of the second and third sealing rings relative the housing is ensured, which improves the durability and reliability of the sealing arrangement. In addition, a sealing arrangement is provided having conditions and characteristics suitable for being assembled and manufactured in a still simpler and cost-efficient manner.

Optionally, the spring elements comprise a first spring element arranged in the first annular cavity and a second spring element arranged in the second annular cavity. Thereby, separation of the first and second spring elements is ensured. As a result, the risk of jamming between the first and second spring elements is circumvented. As a further result thereof, the durability and the reliability of the sealing arrangement is further improved. In addition, due to these features, a sealing arrangement is provided having conditions and characteristics suitable for being assembled and manufactured in a still simpler and cost-efficient manner.

Optionally, the first connecting element is arranged adjacent to the first spring element in the first annular cavity. Thereby, the first connecting element can act as a guide for the first spring element which reduces the risk of a misalignment of the first spring element. As a result, the durability and the reliability of the sealing arrangement is further improved. In addition, a sealing arrangement is provided having conditions and characteristics suitable for being assembled and manufactured in a still simpler and cost-efficient manner.

Optionally, the second connecting element is arranged adjacent to the second spring element in the second annular cavity. Thereby, the second connecting element can act as a guide for the second spring element which reduces the risk of a misalignment of the second spring element. As a result, the durability and the reliability of the sealing arrangement is further improved. In addition, a sealing arrangement is provided having conditions and characteristics suitable for being assembled and manufactured in a still simpler and cost-efficient manner.

According to a second aspect of the invention, the object is achieved by a hydrodynamic machine comprising a shaft, a housing and a sealing arrangement according to some embodiments, wherein the sealing arrangement is configured to seal a space between the shaft and the housing.

Since the hydrodynamic machine comprises a sealing arrangement according to some embodiments, a hydrodynamic machine is provided with improved cooling efficiency and improved lubrication efficiency of the sealing arrangement sealing the space between the shaft and the housing. Thereby, a more durable and reliable hydrodynamic machine is provided with reduced risk of leakage in the space between the shaft and the housing of the hydrodynamic machine. In addition, a hydrodynamic machine is provided capable of reducing cost of repair and replacement of components of the hydrodynamic machine.

Furthermore, a hydrodynamic machine is provided having conditions and characteristics suitable for being assembled and manufactured in a simple and cost-efficient manner.

Accordingly, a hydrodynamic machine is provided overcoming, or at least alleviating, at least some of the above-mentioned problems and drawbacks. As a result, the above-mentioned object is achieved.

Optionally, the hydrodynamic machine is a hydrodynamic retarder comprising a rotor connected to the shaft, and wherein the rotor is arranged in the housing. Thereby, a hydrodynamic retarder is provided with improved cooling efficiency and improved lubrication efficiency of the sealing arrangement sealing the space between the shaft and the housing of the hydrodynamic retarder. Thereby, a more durable and reliable hydrodynamic retarder is provided with reduced risk of leakage in the space between the shaft and the housing of the hydrodynamic retarder. In addition, a hydrodynamic retarder is provided capable of reducing cost of repair and replacement of components of the hydrodynamic retarder.

Furthermore, a hydrodynamic retarder is provided having conditions and characteristics suitable for being assembled and manufactured in a simple and cost-efficient manner.

According to a third aspect of the invention, the object is achieved by a vehicle comprising a hydrodynamic machine according to some embodiments.

Since the vehicle comprises hydrodynamic machine according to some embodiments, a vehicle is provided comprising a more durable and reliable hydrodynamic machine. As a further result, a vehicle is provided having conditions for a reduced cost of repair and replacement of components of the vehicle.

Accordingly, a vehicle is provided overcoming, or at least alleviating, at least some of the above-mentioned problems and drawbacks. As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a cross section of a portion of a hydrodynamic machine, according to some embodiments,
Fig. 2 illustrates an enlarged view of a cross section through a sealing arrangement of the hydrodynamic machine illustrated in Fig. 1,
Fig. 3 illustrates a second cross section through the sealing arrangement of the hydrodynamic machine illustrated in Fig. 1,
Fig. 4 illustrates a perspective view of a sealing housing of the sealing arrangement illustrated in Fig. 1 - Fig. 3,
Fig. 5 illustrated a perspective view of two locking elements of the sealing arrangementillustrated in Fig. 1 - Fig. 3,
Fig. 6 illustrates the locking elements illustrated in Fig. 5 positioned in recesses of a wall of the sealing housing illustrated in Fig. 4,
Fig. 7 illustrates a perspective view of a second and a third sealing ring of the sealing arrangement illustrated in Fig. 1 - Fig. 3,
Fig. 8 illustrates a perspective view of a first and a second spring element, the locking elements, and the second and third sealing rings of the sealing arrangement according to the embodiments illustrated in Fig. 1 - Fig. 7, and
Fig. 9 illustrates a vehicle according to some embodiments.

### DETAILED DESCRIPTION

Aspects of the present invention will now be described more fully. Like numbers refer to like elements throughout. Well-known functions or constructions will not necessarily be described in detail for brevity and/or clarity.

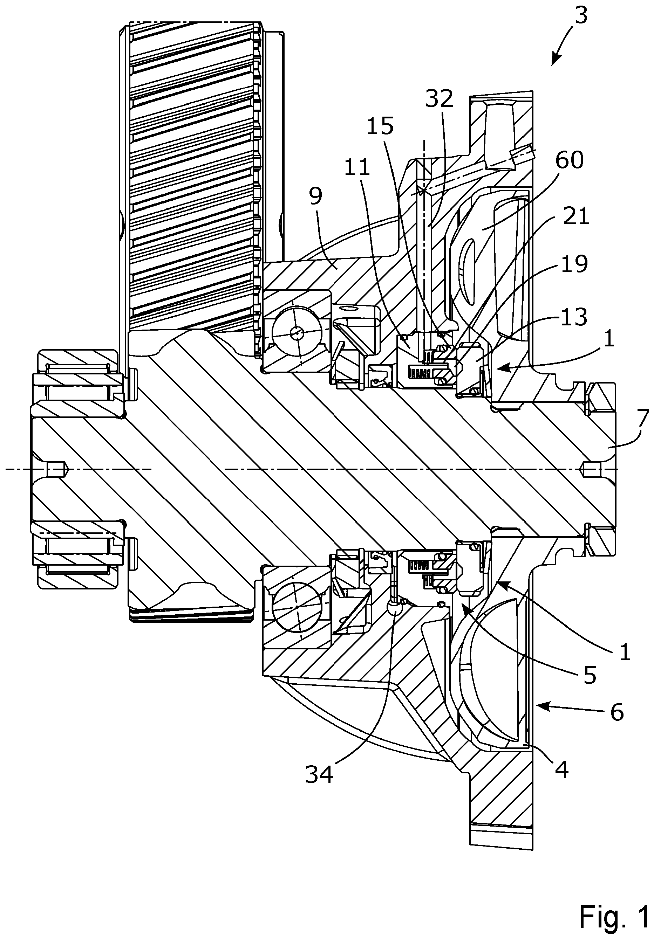

**Fig. 1** illustrates a cross section of a portion of a hydrodynamic machine 3, according to some embodiments. According to the illustrated embodiments, the hydrodynamic machine 3 is a hydrodynamic retarder configured to generate a braking torque that can be transferred to wheels of a vehicle, as is further explained herein. The hydrodynamic machine 3 comprises a rotor 60 connected to a shaft 7. The rotor 60 is arranged in the housing 9. The shaft 7 extends through an opening of the housing 9. A stator is arranged adjacent to the rotor 60. The stator is not illustrated in Fig. 1 for the reason of brevity and clarity. The rotor 60 and stator each comprises a multiplicity of shovels 4 which together form a workspace 6. The hydrodynamic machine 3 comprises a working medium circuit connected to the workspace. When retardation is required, working medium, such as oil, water, or a water mixture, is pumped into the workspace, and the viscous drag induced in the workspace 6 will generate the braking torque. During braking, the working medium will heat. According to some embodiments, working medium circuit is connected to a cooling circuit of an engine of the vehicle. According to such embodiments, the working medium may comprise a mixture of water and glycol. According to such embodiments, the hydrodynamic machine 3 may be referred to as a water retarder. The working medium may in these embodiments be cooled in heat exchanger of the cooling circuit of the engine of the vehicle, or in a separate heat exchanger arranged to dissipate the heat generated by the hydrodynamic machine 3.

The hydrodynamic machine 3 comprises a sealing arrangement 1 configured to seal a space 5 between a shaft 7 and a housing 9 of the hydrodynamic machine 3. The sealing arrangement 1 comprises a sealing housing 11 connected to the housing 9 of the hydrodynamic machine 3. According to the illustrated embodiments, the sealing housing 11 is a separate unit positioned in a seat of the housing 9 of the hydrodynamic machine 3. According to further embodiments, the sealing housing 11 may be integral of the housing 9 of the hydrodynamic machine 3. The sealing arrangement 1 comprises a first sealing ring 13 connected to the shaft 7. The first sealing ring 13 comprises a first annular sealing surface 13'. The sealing arrangement 1 further comprises a second sealing ring 15 arranged in the sealing housing 11.

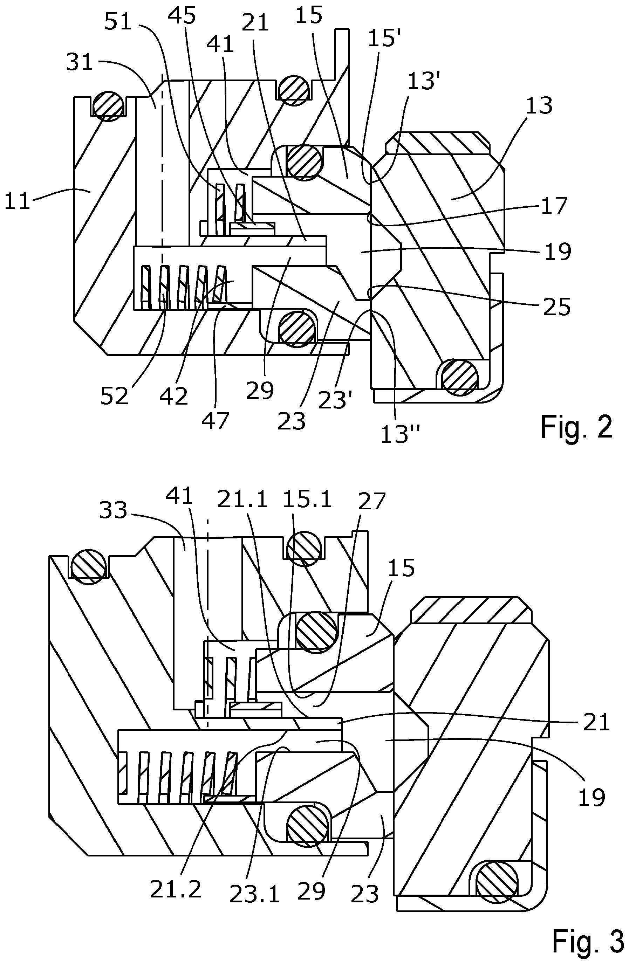

**Fig. 2** illustrates an enlarged view of a cross section through the sealing arrangement 1 of the hydrodynamic machine illustrated in Fig. 1. As indicated in Fig. 2, the second sealing ring 15 comprises a second annular sealing surface 15' configured to sealingly abut against the first annular sealing surface 13' of the first sealing ring 13 in a first abutment interface 17. The sealing arrangement 1 comprises a coolant space 19 adjacent to the first abutment interface 17. The coolant space 19 extends to a portion of the first abutment interface 17 and is configured to provide cooling and lubrication of the first abutment interface 17. According to the illustrated embodiments, the coolant space 19 is an annular coolant space extending around the entire inner circumference of the first abutment interface 17, and around the entire inner circumference of the second sealing ring 15. That is, according to the illustrated embodiments, the coolant space 19 is arranged such that coolant in the coolant space 19 is in contact with the entire inner circumference of the first abutment interface 17. The sealing housing 11 comprises a wall 21 protruding into the coolant space 19. The wall 21 is configured to direct a flow of coolant in the coolant space 19. In this manner, an improved cooling and an improved lubrication of the first abutment interface 17 is provided, as is further explained herein. Further, as can be seen in Fig. 2, the wall 21 is integral of the sealing housing 11. Thereby, the assembling of the sealing arrangement 1 is facilitated, as is further explained herein. The wall 21 extends concentrically in relation to the second sealing ring 15.

According to the illustrated embodiments, the sealing arrangement 1 comprises a third sealing ring 23 arranged in the sealing housing 11. The third sealing ring 23 has a smaller diameter than the second sealing ring 15 and is arranged concentrically to the second sealing ring 15. The first sealing ring 13 comprises a fourth annular sealing surface 13". The third sealing ring 23 comprises a third annular sealing surface 23' configured to sealingly abut against the fourth annular sealing surface 13" of the first sealing ring 13. During operation of the hydrodynamic machine, the first sealing ring 13 will corotate with the shaft. The second and third sealing ring 13, 23 are stationary relative the sealing housing 11. The annular sealing surfaces 13', 13" of the first sealing ring 13 will thus slide relative the sealing surfaces 15', 23' of the second and third sealing rings 15, 23 during operation of the hydrodynamic machine. Each of the sealing surfaces 13', 13", 15', 23' of the first, second, and third sealing rings 13, 15, 23 comprises a hard material. The first, second, and third sealing rings 13, 15, 23 may be manufactured of ceramic, carbon, silicon carbide, or tungsten carbide or any equal hard material.

The coolant space 19 extends between the first abutment interface 17 and a second abutment interface 25 between the third and fourth annular sealing surfaces 23', 13". That is, the coolant space 19 is arranged adjacent to the second abutment interface 25 and extends to a portion of the second abutment interface 25. The coolant space 19 is configured to provide cooling and lubrication of the second abutment interface 25. According to the illustrated embodiments, the coolant space 19 extends around the entire outer circumference of the second abutment interface 25, and around the entire outer circumference of the third sealing ring 23. That is, according to the illustrated embodiments, the coolant space 19 is arranged such that coolant in the coolant space 19 is in contact with the entire outer circumference of the second abutment interface 25. Thus, according to the illustrated embodiments, the coolant space 19 provides cooling and lubrication of the first and second abutment interfaces 17, 25 in an efficient manner.

According to the illustrated embodiments, the wall 21 extends in a space confined by the second and third sealing rings 15, 23. Further, as will be further explained below, the sealing housing 11 is arranged such that the flow of coolant is directed around the wall 21. Further, as can be seen in Fig. 2, the sealing arrangement 1 comprises a first spring element 52 configured to bias the second sealing ring 15 towards the first sealing ring 13, and a second spring element 52 configured to bias the third sealing ring 23 towards the first sealing ring 13.

**Fig. 3** illustrates a second cross section through the sealing arrangement 1 of the hydrodynamic machine illustrated in Fig. 1. The cross section illustrated in Fig. 3 is located at a different circumferential position of the sealing arrangement 1 than the cross section illustrated in Fig. 2. As indicated in Fig. 3, a first surface 21.1 of the wall 21 and a surface 15.1 of the second sealing ring 15 together delimit a first coolant passage portion 27 of the coolant space 19. Furthermore, a second surface 21.2 of the wall 21 and a surface 23.1 of the third sealing ring 23 together delimit a second coolant passage portion 29 of the coolant space 19.

The sealing arrangement 1 comprises coolant outlet 33 fluidly connected to the first coolant passage portion 27. Further, as can be seen in Fig. 2, the sealing arrangement 1 comprises coolant inlet 31. The coolant inlet 31 is arranged at a different circumferential position of the sealing arrangement 1 than the coolant outlet 33. The coolant inlet 31 illustrated in Fig. 2 is fluidly connected to the second coolant passage portion 29 indicated in Fig. 3. Below, simultaneous reference is made to Fig. 1 - Fig. 3. The housing 9 of the hydrodynamic machine 3 comprises an inlet duct fluidly connected to the coolant inlet 31 of the sealing arrangement 1, and an outlet duct 32 fluidly connected to the coolant outlet 33 of the sealing arrangement 1.

In this manner, during operation of the hydrodynamic machine 3, coolant is pumped into the inlet 31 of the sealing arrangement 1, through the second coolant passage portion 29, around the wall 21 and into the first coolant passage portion 27. Since the coolant inlet 31 and the coolant outlet 33 are arranged at different circumferential positions, and since the coolant space 19 is annular, the coolant will also flow around the circumference of the coolant space 19. Thereby, an improved cooling and an improved lubrication of the first and second abutment interfaces 17, 25 is provided. In addition, the slight overpressure in the coolant space 19 may provide a controlled leakage of coolant through the respective first and second abutment interfaces 17, 25. In this manner, an improved cooling and an improved lubrication of the annular sealing surfaces 13', 15', 23', 13" is provided. The coolant in the coolant space 19 may be coolant of a type used as working medium in the workspace 6 of the hydrodynamic machine 3, for example a mixture of water and glycol. Coolant leaking from the coolant space 19 through the first abutment interface 17 will leak into the workspace 6 of the hydrodynamic machine 3 and can thus be pumped from the workspace 6 by the pumping action of the rotor 60. As indicated in Fig. 1, the hydrodynamic machine comprises a drainage channel 34. Coolant leaking from the coolant space 19 through the second abutment interface 25 is evacuated through the drainage channel 34.

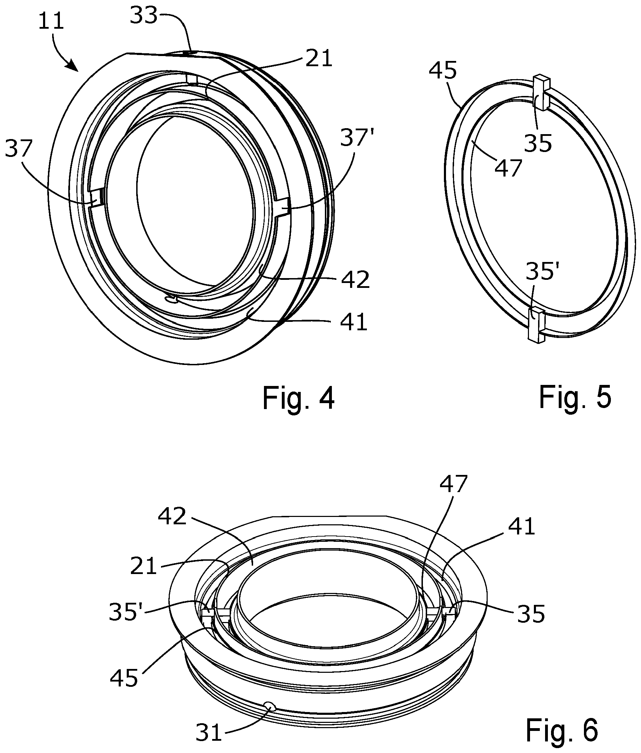

**Fig. 4** illustrates a perspective view of the sealing housing 11 of the sealing arrangement 1illustrated in Fig. 1 - Fig. 3. As indicated in Fig. 4, the sealing housing 11 comprises a first and a second annular cavity 41, 42 each delimited by the wall 21. The second sealing ring is configured to be arranged in the first annular cavity 41, and the third sealing ring is configured to be arranged in the second annular cavity 42. The coolant outlet 33 is fluidly connected to the first annular cavity 41. The coolant inlet 31, indicated in Fig. 2 is fluidly connected to the second annular cavity 42, indicated in Fig. 4. Further, as can be seen in Fig. 4, the wall 21 comprises two recesses 37, 37' arranged at different circumferential positions of the wall 21.

**Fig. 5** illustrated a perspective view of two locking elements 35, 35' of the sealing arrangement illustrated in Fig. 1 - Fig. 3. The two locking elements 35, 35' are connected by a first annular connecting element 45, and by a second annular connecting element 47. The first and second annular connecting elements 45, 47 are concentrically arranged, and the first annular connecting element 45 is arranged on a radial outside of the second annular connecting element 47. According to the illustrated embodiments, the first connecting element 45, the second connecting element 47, and the one or more locking elements 35, 35' are formed by one coherent piece of material. The first connecting element 45, the second connecting element 47, and the one or more locking elements 35, 35' may be formed by a polymeric material, or a metal material, such as aluminium.

**Fig. 6** illustrates the locking elements 35, 35' illustrated in Fig. 5 positioned in the recesses 37, 37' of the wall 21 of the sealing housing 11 illustrated in Fig. 4. As can be seen in Fig. 6, when the two locking elements 35, 35' are be positioned in the recesses 37, 37' of the wall 21, the first connecting element 45 is arranged in the first annular cavity 41, and the second connecting element 47 is arranged in the second annular cavity 42. Further, in Fig. 6, the coolant inlet 31 can be seen, which, as mentioned, is fluidly connected to the second annular cavity 42.

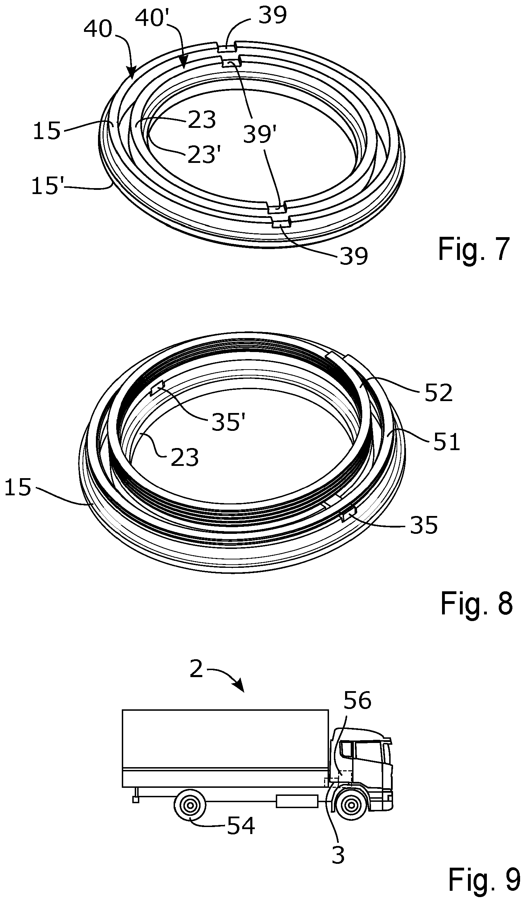

**Fig. 7** illustrates a perspective view of the second and third sealing rings 15, 23 of the sealing arrangement 1 illustrated in Fig. 1 - Fig. 3. As can be seen in Fig. 7, the second and third sealing rings 15, 23 each comprises two recesses 39, 39' arranged at different circumferential positions of the respective sealing ring 15, 23. The recesses 39, 39' are made in a surface 40, 40' of the respective second and third sealing ring 15, 23 opposite to the annular sealing surface 15', 23' of the respective second and third sealing ring 15, 23, i.e. in a surface 40, 40' of the respective second and third sealing ring 15, 23 facing away from the first sealing ring 13 when the sealing arrangement 1 is assembled, as is illustrated in Fig. 1 -Fig. 3.

Below, simultaneous reference is made to Fig. 4 - Fig. 7. The second and third sealing rings 15, 23 are configured to be positioned in the first and second annular cavities 41, 42, such that the recesses 39, 39' each receives a locking element 35, 35'. When the sealing element is assembled, each locking element 35, 35' extends into one recess 37, 37' of the wall 21 and into one recess 39, 39' of the respective second and third sealing rings 15, 23. In this manner, the locking elements 35, 35' will lock the second and third sealing rings 15, 23 from rotating relative the sealing housing 11. The locking elements 35, 35' may be configured to allow a predetermined degree of rotation of the second and third sealing rings 15, 23 relative the sealing housing 11, and may be provided in a material providing damping of the rotation of the second and third sealing rings 15, 23 relative the sealing housing 11. Such material may for example comprise a polymeric material. Further, due to the functions and features explained above, the sealing arrangement can be assembled in a simple and cost-efficient manner, as is further explained below.

The sealing arrangement 1 may comprise another number of locking elements 35, 35' than two, such as one, three, four, five, or six. According to such embodiments, the wall 21 may comprise a corresponding number of recesses 37, 37', and the second and third sealing rings 15, 23 may each comprise a corresponding number of recesses 39, 39', such that when the sealing element is assembled, each locking element 35, 35' extends into one recess 37, 37' of the wall 21 and into one recess 39, 39' of the respective second and third sealing rings 15, 23.

**Fig. 8** illustrates a perspective view of the first and the second spring elements 51, 52, the locking elements 35, 35', and the second and third sealing rings 15, 23 of the sealing arrangement 1 according to the embodiments illustrated in Fig. 1 - Fig. 7. As can be seen in Fig. 8, according to these embodiments, the first and second spring elements 51, 52 each comprises a coil spring. Below, simultaneous reference is made to Fig. 1 - Fig. 8. The first spring element 51 has a diameter matching the diameter of the first annular cavity 41. The second spring element 52 has a diameter matching the diameter of the second annular cavity 42.

In an assembling process of the sealing arrangement 1, an assembler may position the first spring element 51 in the first annular cavity 41 of the sealing housing 11, and may position the second spring element 52 in the second annular cavity 42 of the sealing housing 11. Then, the assembler may position the locking elements 35, 35' in the recesses 37, 37' of the wall 21 of the sealing housing 11. Then, the assembler may position the second sealing ring 15 in the first annular cavity 41 such that the recesses 39 of the second sealing ring 15 each receives a locking element 35, 35'. Then, the assembler may position the third sealing ring 23 in the second annular cavity 42 such that the recesses 39' of third sealing ring 23 each receives a locking element 35, 35'. In this manner, the sealing arrangement 1 can be assembled in a quick, simple and cost-efficient manner.

Further, as can be seen in Fig. 8, according to the illustrated embodiments, the spring elements 51, 52 are configured to bias the one or more locking elements 35, 35' towards the second and third sealing rings 15, 23. In this manner, it is ensured that the locking elements 35, 35' are kept in place in the recesses 39, 39' of the second and third sealing rings 15, 23.

As best seen in Fig. 6, the locking elements 35, 35' each extends in a radial direction of the sealing arrangement 1. In addition, as best seen in Fig. 6, the first and second connecting elements 45, 47 may each contribute in keeping the locking elements 35, 35' in a substantially straight radial direction during operation of the hydrodynamic machine, which reduces the risk of a dislocation of the respective locking element 35, 35'. However, according to some embodiments, the first and second connecting elements 45, 47 may each comprise a flexible material allowing a predetermined degree of dislocation of the respective locking element 35, 35', i.e. a predetermined degree of rotation of the respective locking element 35, 35', so as to allow a predetermined degree of relative rotation between the second and third sealing rings 15, 23. In this manner, a more durable sealing arrangement 1 is provided because a predetermined degree of relative rotation between the second and third sealing rings 15, 23 is allowed for during rapid changes in rotational velocity of the shaft, occurring for example during start-up phases of the hydrodynamic machine.

Furthermore, according to the illustrated embodiments, the locking elements 35, 35' are retained and contained in the sealing housing 11 when the sealing arrangement 1 is assembled and does not extend through openings in outer walls of the sealing housing 11. As a result thereof, the assembling process of the sealing arrangement 1 is facilitated and a more leak proof sealing arrangement 1 is provided.

Further, as best seen in Fig. 2, according to the illustrated embodiments, the first connecting element 45 of the locking elements 35, 35' is arranged adjacent to the first spring element 51 in the first annular cavity 41. Furthermore, the second connecting element 47 is arranged adjacent to the second spring element 52 in the second annular cavity 42. In this manner, the connecting elements 45, 47 act as guides for the spring elements 51, 52 which reduces the risk of a misalignment of the spring elements 51, 52.

**Fig. 9** illustrates a vehicle 2 according to some embodiments. The vehicle 2 comprises a hydrodynamic machine 3 according to the embodiments illustrated in Fig. 1. The vehicle 2 comprises wheels 54 and a power source 56 configured to provide motive power to the vehicle 2, via one or more wheels 54 of the vehicle 2. The hydrodynamic machine 3 is configured to selectively generate a braking torque to one or more wheels 54 of the vehicle 2.

According to the illustrated embodiments, the vehicle 2 is a truck. However, according to further embodiments, the vehicle 2, as referred to herein may be another type of manned or unmanned vehicle for land or water based propulsion such as a lorry, a bus, a construction vehicle, a tractor, a car, a ship, a boat, or the like.

## Claims

1. A sealing arrangement (1) for a hydrodynamic machine (3), wherein the sealing arrangement (1) is configured to seal a space (5) between a shaft (7) and a housing (9) of the hydrodynamic machine (3), and wherein the sealing arrangement (1) comprises:
- a sealing housing (11) configured to be connected to the housing (9),
- a first sealing ring (13) configured to be connected to the shaft (7),
wherein the first sealing ring (13) comprises a first annular sealing surface (13'), and
- a second sealing ring (15) arranged in the sealing housing (11), wherein the second sealing ring (15) comprises a second annular sealing surface (15') configured to sealingly abut against the first annular sealing surface (13') in a first abutment interface (17),
wherein the sealing arrangement (1) comprises a coolant space (19) adjacent to the first abutment interface (17),
wherein the sealing housing (11) comprises a wall (21) protruding into the coolant space (19),
and wherein the wall (21) is configured to direct a flow of coolant in the coolant space (19), **characterised in that**
the wall (21) is integral of the sealing housing (11).

2. The sealing arrangement (1) according to claim 1, wherein the sealing housing (11) is arranged such that the flow of coolant is directed around the wall (21).

3. The sealing arrangement (1) according to any one of the preceding claims, wherein the wall (21) extends concentrically in relation to the second sealing ring (15).

4. The sealing arrangement (1) according to any one of the preceding claims, wherein the sealing arrangement (1) comprises a third sealing ring (23) arranged in the sealing housing (11), wherein the first sealing ring (13) comprises a fourth annular sealing surface (13"), and wherein the third sealing ring (23) comprises a third annular sealing surface (23') configured to sealingly abut against the fourth annular sealing surface (13").

5. The sealing arrangement (1) according to claim 4, wherein the coolant space (19) extends between the first abutment interface (17) and a second abutment interface (25) between the third and fourth annular sealing surfaces (23', 13").

6. The sealing arrangement (1) according to claim 4 or 5, wherein the wall (21) extends in a space confined by the second and third sealing rings (15, 23).

7. The sealing arrangement (1) according to any one of the claims 4-6, wherein the sealing arrangement (1) comprises one or more locking elements (35, 35') configured to lock the second and third sealing rings (15, 23) from rotating relative the sealing housing (11).

8. The sealing arrangement (1) according to claim 7, wherein the wall (21) comprises at least one recess (37, 37'), and wherein the second and third sealing rings (15, 23) each comprises at least one recess (39, 39'), wherein each of the one or more locking elements (35, 35') extends into one recess (37, 37') of the wall (21) and into one recess (39, 39') of the respective second and third sealing rings (15, 23).

9. The sealing arrangement (1) according to claim 8, wherein the recesses (37, 37', 39, 39') and the one or more locking elements (35, 35') are configured to allow a predetermined degree of rotation of the second and third sealing rings (15, 23) relative the sealing housing (11).

10. The sealing arrangement (1) according to any one of the claims 4-9, wherein the sealing housing (11) comprises a first and a second annular cavity (41, 42) each delimited by the wall (21), and wherein the second sealing ring (15) is arranged in the first annular cavity (41), and the third sealing ring (23) is arranged in the second annular cavity (42).

11. The sealing arrangement (1) according to any one of the claims 4 - 10, wherein the sealing arrangement (1) comprises spring elements (51, 52) configured to bias the second and third sealing rings (15, 23) towards the first sealing ring (13).

12. A hydrodynamic machine (3) comprising a shaft (7), a housing (9) and a sealing arrangement (1) according to any one of the preceding claims, wherein the sealing arrangement (1) is configured to seal a space (5) between the shaft (7) and the housing (9).

13. The hydrodynamic machine (3) according to claim 12, wherein the hydrodynamic machine (3) is a hydrodynamic retarder comprising a rotor (60) connected to the shaft (7), and wherein the rotor (60) is arranged in the housing (9).

14. A vehicle (2) comprising a hydrodynamic machine (3) according to claim 12 or 13.

## Patentansprüche

1. Dichtungsanordnung (1) für eine hydrodynamische Maschine (3), wobei die Dichtungsanordnung (1) dazu konfiguriert ist, einen Raum (5) zwischen einer Welle (7) und einem Gehäuse (9) der hydrodynamischen Maschine (3) abzudichten, und wobei die Dichtungsanordnung (1) umfasst:
- ein Dichtungsgehäuse (11), das dazu ausgeführt ist, mit dem Gehäuse (9) verbunden zu werden,
- einen ersten Dichtungsring (13), der dazu ausgeführt ist, mit der Welle (7) verbunden zu werden, wobei der erste Dichtungsring (13) eine erste ringförmige Dichtfläche (13') aufweist, und
- einen im Dichtungsgehäuse (11) angeordneten zweiten Dichtungsring (15), wobei der zweite Dichtungsring (15) eine zweite ringförmige Dichtfläche (15') aufweist, die dazu ausgestaltet ist, an der ersten ringförmigen Dichtfläche (13') in einer ersten Kontaktschnittstelle (17) anzuliegen, wobei die Dichtungsanordnung (1) neben der ersten Kontaktschnittstelle (17) einen Kühlmittelraum (19) umfasst, wobei das Dichtungsgehäuse (11) eine Wand (21) umfasst, die in den Kühlmittelraum (19) ragt, und wobei die Wand (21) dazu ausgestaltet ist, einen Kühlmittelstrom in den Kühlmittelraum (19) zu leiten, **dadurch gekennzeichnet, dass** die Wand (21) einstückig mit dem Dichtungsgehäuse (11) ausgebildet ist.

2. Dichtungsanordnung (1) nach Anspruch 1, wobei das Dichtungsgehäuse (11) dazu angeordnet ist, den Kühlmittelstrom um die Wand (21) herumzuführen.

3. Dichtungsanordnung (1) nach einem der vorhergehenden Ansprüche, wobei die Wand (21) konzentrisch bezüglich des zweiten Dichtungsrings (15) verläuft.

4. Dichtungsanordnung (1) nach einem der vorhergehenden Ansprüche, wobei die Dichtungsanordnung (1) einen dritten Dichtungsring (23) umfasst, der im Dichtungsgehäuse (11) angeordnet ist, wobei der erste Dichtungsring (13) eine vierte ringförmige Dichtfläche (13") aufweist, und wobei der dritte Dichtungsring (23) eine dritte ringförmige Dichtfläche (23') aufweist, die dazu ausgestaltet ist, dichtend an der vierten ringförmigen Dichtfläche (13") anzuliegen.

5. Dichtungsanordnung (1) nach Anspruch 4, wobei der Kühlmittelraum (19) sich zwischen der ersten Kontaktschnittstelle (17) und einer zweiten Kontaktschnittstelle (25) zwischen den dritten und vierten ringförmigen Dichtflächen (23', 13") erstreckt.

6. Dichtungsanordnung (1) nach Anspruch 4 oder 5, wobei sich die Wand (21) in einem Raum erstreckt, der durch die zweiten und dritten Dichtungsringe (15, 23) begrenzt ist.

7. Dichtungsanordnung (1) nach einem der Ansprüche 4 bis 6, wobei die Dichtungsanordnung (1) ein oder mehrere Verriegelungselemente (35, 35') umfasst, die dazu eingerichtet sind, die zweiten und dritten Dichtungsringe (15, 23) gegen eine Drehung relativ zum Dichtungsgehäuse (11) zu arretieren.

8. Dichtungsanordnung (1) nach Anspruch 7, wobei die Wand (21) mindestens eine Ausnehmung (37, 37') aufweist, und wobei der zweite und dritte Dichtungsring (15, 23) jeweils mindestens eine Ausnehmung (39, 39') umfassen, wobei jedes des einen oder der mehreren Verriegelungselemente (35, 35') sich in eine Ausnehmung (37, 37') der Wand (21) und in eine Ausnehmung (39, 39') des zugehörigen zweiten und dritten Dichtungsrings (15, 23) erstreckt.

9. Dichtungsanordnung (1) nach Anspruch 8, wobei die Ausnehmungen (37, 37', 39, 39') und das eine oder die mehreren Verriegelungselemente (35, 35') dazu ausgebildet sind, ein vorbestimmtes Maß an Rotation des zweiten und dritten Dichtungsrings (15, 23) relativ zum Dichtungsgehäuse (11) zuzulassen.

10. Dichtungsanordnung (1) nach einem der Ansprüche 4 - 9, wobei das Dichtungsgehäuse (11) einen ersten und einen zweiten ringförmigen Hohlraum (41, 42) aufweist, die jeweils von der Wand (21) begrenzt sind, und wobei der zweite Dichtungsring (15) in dem ersten ringförmigen Hohlraum (41) angeordnet ist und der dritte Dichtungsring (23) in dem zweiten ringförmigen Hohlraum (42) angeordnet ist.

11. Dichtungsanordnung (1) nach einem der Ansprüche 4 - 10, wobei die Dichtungsanordnung (1) Federelemente (51, 52) umfasst, die dazu eingerichtet sind, die zweiten und dritten Dichtungsringe (15, 23) gegen den ersten Dichtungsring (13) vorzuspannen.

12. Hydrodynamische Maschine (3), mit einer Welle (7), einem Gehäuse (9) und einer Dichtungsanordnung (1) nach einem der vorhergehenden Ansprüche, wobei die Dichtungsanordnung (1) dazu ausgebildet ist, einen Raum (5) zwischen der Welle (7) und dem Gehäuse (9) abzudichten.

13. Hydrodynamische Maschine (3) nach Anspruch 12, wobei die hydrodynamische Maschine (3) ein hydrodynamischer Retarder mit einem Rotor (60) ist, der mit der Welle (7) verbunden ist, und wobei der Rotor (60) in dem Gehäuse (9) angeordnet ist.

14. Fahrzeug (2) mit einer hydrodynamischen Maschine (3) nach Anspruch 12 oder 13.

## Revendications

1. Agencement d'étanchéité (1) pour une machine hydrodynamique (3), dans lequel l'agencement d'étanchéité (1) est configuré pour assurer l'étanchéité d'un espace (5) entre un arbre (7) et un logement (9) de la machine hydrodynamique (3), et dans lequel l'agencement d'étanchéité (1) comprend :
- un boîtier d'étanchéité (11) configuré pour être connecté au boîtier (9),
- un premier anneau d'étanchéité (13) configuré pour être connecté à l'arbre (7),
dans lequel le premier anneau d'étanchéité (13) comprend une première surface d'étanchéité annulaire (13'), et
- un deuxième anneau d'étanchéité (15) agencé dans le boîtier d'étanchéité (11), dans lequel le deuxième anneau d'étanchéité (15) comprend une deuxième surface d'étanchéité annulaire (15') configurée pour venir en butée de manière étanche contre la première surface d'étanchéité annulaire (13') dans une première interface de butée (17),
dans lequel l'agencement d'étanchéité (1) comprend un espace de refroidissement (19) adjacent à la première interface de butée (17),
dans lequel le boîtier d'étanchéité (11) comprend une paroi (21) faisant saillie dans l'espace de refroidissement (19),
et dans lequel la paroi (21) est configurée pour diriger un flux de liquide de refroidissement dans l'espace de refroidissement (19), **caractérisé en ce que** la paroi (21) est intégrée au logement d'étanchéité (11).

2. Agencement d'étanchéité (1) selon la revendication 1, dans lequel le boîtier d'étanchéité (11) est agencé de telle sorte que le flux de liquide de refroidissement est dirigé autour de la paroi (21).

3. Agencement d'étanchéité (1) selon l'une quelconque des revendications précédentes, dans lequel la paroi (21) s'étend de manière concentrique par rapport au deuxième anneau d'étanchéité (15).

4. Agencement d'étanchéité (1) selon l'une quelconque des revendications précédentes, dans lequel l'agencement d'étanchéité (1) comprend un troisième anneau d'étanchéité (23) agencé dans le logement d'étanchéité (11), dans lequel le premier anneau d'étanchéité (13) comprend une quatrième surface d'étanchéité annulaire (13"), et dans lequel le troisième anneau d'étanchéité (23) comprend une troisième surface d'étanchéité annulaire (23') configurée pour venir en butée de manière étanche contre la quatrième surface d'étanchéité annulaire (13").

5. Agencement d'étanchéité (1) selon la revendication 4, dans lequel l'espace de refroidissement (19) s'étend entre la première interface de butée (17) et une deuxième interface de butée (25) entre les troisième et quatrième surfaces d'étanchéité annulaires (23', 13").

6. Agencement d'étanchéité (1) selon la revendication 4 ou 5, dans lequel la paroi (21) s'étend dans un espace confiné par les deuxième et troisième anneaux d'étanchéité (15, 23).

7. Agencement d'étanchéité (1) selon l'une quelconque des revendications 4 à 6, dans lequel l'agencement d'étanchéité (1) comprend un ou plusieurs éléments de verrouillage (35, 35') configurés pour empêcher les deuxième et troisième anneaux d'étanchéité (15, 23) de tourner par rapport au logement d'étanchéité (11).

8. Agencement d'étanchéité (1) selon la revendication 7, dans lequel la paroi (21) comprend au moins un évidement (37, 37'), et dans lequel les deuxième et troisième anneaux d'étanchéité (15, 23) comprennent chacun au moins un évidement (39, 39'), dans lequel chacun des un ou plusieurs éléments de verrouillage (35, 35') s'étend dans un évidement (37, 37') de la paroi (21) et dans un évidement (39, 39') des deuxième et troisième anneaux d'étanchéité respectifs (15, 23).

9. Agencement d'étanchéité (1) selon la revendication 8, dans lequel les évidements (37, 37', 39, 39') et le ou les éléments de verrouillage (35, 35') sont configurés pour permettre un degré prédéterminé de rotation des deuxième et troisième anneaux d'étanchéité (15, 23) par rapport au logement d'étanchéité (11).

10. Agencement d'étanchéité (1) selon l'une quelconque des revendications 4 à 9, dans lequel le logement d'étanchéité (11) comprend une première et une deuxième cavité annulaire (41, 42) chacune délimitée par la paroi (21), et dans lequel le deuxième anneau d'étanchéité (15) est agencée dans la première cavité annulaire (41), et le troisième anneau d'étanchéité (23) est agencée dans la deuxième cavité annulaire (42).

11. Agencement d'étanchéité (1) selon l'une quelconque des revendications 4 à 10, dans lequel l'agencement d'étanchéité (1) comprend des éléments de ressort (51, 52) configurés pour solliciter les deuxième et troisième anneaux d'étanchéité (15, 23) vers le premier anneau d'étanchéité (13).

12. Machine hydrodynamique (3) comprenant un arbre (7), un logement (9) et un agencement d'étanchéité (1) selon l'une quelconque des revendications précédentes, dans laquelle l'agencement d'étanchéité (1) est configuré pour assurer l'étanchéité d'un espace (5) entre l'arbre (7) et le logement (9).

13. Machine hydrodynamique (3) selon la revendication 12, dans laquelle la machine hydrodynamique (3) est un ralentisseur hydrodynamique comprenant un rotor (60) relié à l'arbre (7), et dans laquelle le rotor (60) est agencé dans le logement (9).

14. Véhicule (2) comprenant une machine hydrodynamique (3) selon la revendication 12 ou 13.
